# EUROPÄISCHE PATENTSCHRIFT

(11) **EP 0 716 945 B1**
(45) Veröffentlichungstag und Bekanntmachung des Hinweises auf die Patenterteilung: **29.07.1998**
(21) Anmeldenummer: 95118738.4
(22) Anmeldetag: 29.11.1995
(51) Int. Cl.: B60J 7/02

(54) **Rahmen für eine von einem Deckel verschliessbare Dachöffnung, insbesondere an einem Kraftfahrzeug**
Frame for a roof opening provided with a closing panel, especially for a motorvehicle
Cadre pour une ouverture de toit avec panneau de fermeture, en particulier pour un véhicule automobile

(30) Priorität: 14.12.1994 DE 4444580
(43) Veröffentlichungstag der Anmeldung: 19.06.1996
(73) Patentinhaber: Bayerische Motoren Werke Aktiengesellschaft, 80788 München (DE)
(72) Erfinder: Moll, Patrick, D-81375 München (DE)

(56) Entgegenhaltungen:
- EP-A- 0 363 912
- DE-C- 4 330 582
- GB-A- 2 180 295

## Beschreibung

Die Erfindung betrifft einen Rahmen für eine von einem Deckel verschließbare Dachöffnung, insbesondere an einem Kraftfahrzeug, mit den im Oberbegriff des Patentanspruches 1 angegebenen Merkmalen.

Ein derartiger Rahmen ist durch die EP-A-0 466 529 bekannt, der oben an der vorderen Begrenzungswand der in Fahrzeugquerrichtung angeordneten Wasserrinne Eintrittsöffnungen für jeweils zwei seitliche, rohrförmige Führungsteile aufweist, die durch die Eintrittsöffnungen hindurchgeführt und an die zugewandten Stirnseiten der Führungsschienen angeschlossen sind. Die oben offenen Eintrittsöffnungen sind nicht abgedichtet. Bei schrägstehendem Fahrzeug kann deshalb in der Wasserrinne angesammeltes Wasser durch die Einrittsöffnungen austreten und in den Himmelbereich einsickern. Die rohrförmigen Führungsteile führen jeweils ein Antriebsseil zu einem vor der Wasserrinne angeordneten Motor und dürften im Anlenkungsbereich über ein übliches Zinkdruckgußteil fixiert sein, das ein Ritzel des Antriebs drehbar abstützt. Ein derartiges Zinkdruckgußteil ist mit einem hohen Kostenaufwand zu fertigen. An den Verbindungsstellen sind die rohrförmigen Führungsteile und die Führungsschienen lagegenau zu montieren, wodurch sich der Fertigungsaufwand erhöht. Bei nicht mit der jeweiligen Aufnahmeöffnung in der Führungsschiene fluchtendem Führungsteil treten bei Längsbewegungen des Antriebsseils störende Rattergeräusche auf, die durch Scheuerbewegungen des Antriebsseils an der vorstehenden Randkante der Aufnahmeöffnung verusacht sind und die Haltbarkeit des Antriebsseils einschränken.

Der Erfindung liegt die Aufgabe zugrunde, einen Rahmen für eine von einem Deckel verschließbare Dachöffnung nach dem Oberbegriff des Patentanspruches 1 anzugeben, der auch bei schrägstehendem Fahrzeug ein Abströmen des in der Wasserrinne gesammelten Wassers durch die Eintrittsöffnung weitgehend verhindert und kostengünstig zu fertigen ist.

Diese Aufgabe ist durch die im Patentanspruch 1 angegebenen Merkmale gelöst. Die einen vorderen Bereich der Wasserrinne abtrennende Wand bildet allein oder zusammen mit der Tropfwasserabdeckung die Eintrittsöffnung für das Führungsteil in einem gegenüber der vorderen Begrenzungswand der Wasserrinne weiter Zurückliegenden Bereich, wodurch auch bei schrägstehendem Fahrzeug bzw. bei Brems- und Beschleunigungsmanövern ein Abströmen des in der Wasserrinne gesammelten Wassers durch die Eintrittsöffnung auch ohne Dichtungsmittel zumindest weitgehend verhindert ist. Die Oberseite bzw. der obere Rand der vorderen Begrenzungswand der quer verlaufenden Wasserrinne kann eben ausgebildet sein und beispielsweise ohne Dichtungsmittel an einem unteren Randbereich der Dachöffnung zumindest weitgehend wasserdicht anliegen. Ein wesentlicher Vorteil der Erfindung ist, daß die beiden seitlichen Führungsschienen mit einem fest ausgebildeten Führungsteil einstückig zu einem U-Rahmenteil verbunden sein können. Ein derart einstückiges Rahmenteil kann besonders kostengünstig aus einem geraden Schienenelement gefertigt werden, das beispielsweise im wesentlichen aus einer Aluminiumlegierung besteht und in einfacher Weise in die entsprechende Form gebogen wird. Die Eintrittsöffnung kann sich über einen größeren Breitenbereich erstrecken und ist auch in diesem Fall nicht abzudichten, da aufgrund der zurückgezogenen Lage der Eintrittsöffnung ein Wasserdurchtritt durch die Eintrittsöffnung zumindest weitgehend verhindert ist. Ein Windabweiser kann im vorderen Randbereich der Dachöffnung vorgesehen sein, der beispielsweise im Bereich der quer verlaufenden Wasserrinne angeordnet ist und sich über die gesamte Breite der Dachöffnung erstreckt.

Vorteilhafte Ausgestaltungen der Erfindung sind Gegenstand von Unteransprüchen.

Ein Ausführungsbeispiel der Erfindung wird anhand einer Zeichnung näher erläutert. Es zeigen
- Figur 1: eine Draufsicht auf den linken vorderen Bereich des Rahmens,
- Figur 2: eine Seitenansicht eines Längsschnitts des in Figur 1 dargestellten Bereiches und
- Figur 3: einen Querschnitt durch den in Figur 1 dargestellten Bereich in der Nähe des Wasserablaufstutzens.

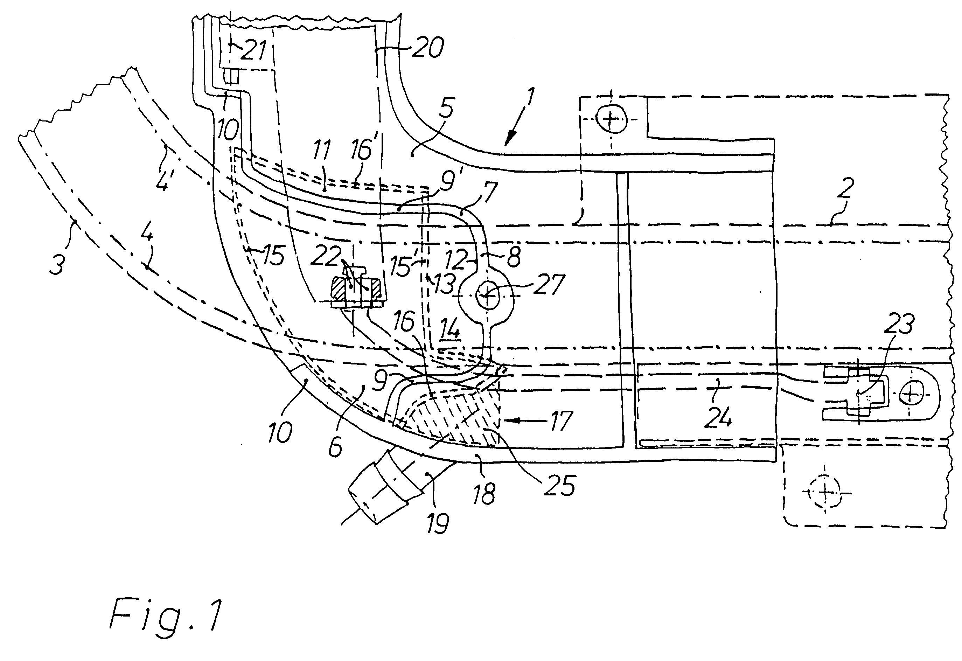

Der mit seinem linken vorderen Bereich in Figur 1 dargestellte Rahmen 1 ist von unten im Randbereich einer von einem Deckel verschließbaren Dachöffnung eines Kraftfahrzeugs befestigt. Er weist zwei seitlich gegenüberliegende, etwa in Fahrzeuglängsrichtung verlaufende Führungsschienen 2 auf, die zusammen mit einem vorderen, etwa quer verlaufenden Führungsteil 3 ein U-Rahmenteil bilden. Das U-Rahmenteil nimmt in zwei Aufnahmeöffnungen 4, 4', von denen in der Figur lediglich die Mittelachsen angedeutet sind, zwei drucksteife Antriebsseile längsverstellbar auf, von denen ein Antriebsseil ein Verstellen des Deckels und das andere Antriebsseil ein Längsverstellen eines unter dem Deckel angeordneten Himmelteiles bewirken kann. Verstellbewegungen der Antriebsseile erfolgen über einen nicht dargestellten, vor einer quer verlaufenden Wasserrinne 5 angeordneten Antrieb, der die in den Aufnahmeöffnungen 4, 4' befindlichen Antriebsseile entsprechend antreibt. Die quer verlaufende Wasserrinne 5 verbindet die vorderen Enden der Führungsschienen 2. Jeweils vor der betreffenden Führungsschiene 2 trennt eine etwa vertikale Wand 7 einen vorderen Bereich 6 der Wasserrinne 5 von dieser ab. Die etwa vertikale Wand 7 ist in einem horizontalen Querschnitt etwa U-förmig ausgebildet und weist eine hinten etwa quer verlaufende Stegwand 8 auf, von deren Seiten Schenkelwände 9, 9' etwa nach vorne verlaufen und mit der vorderen, etwa vertikalen Begrenzungswand 10 der Wasserrinne 5 verbunden sind. Die Stegwand 8 und die Schenkelwände 9, 9' sind mit dem Boden der Wasserrinne 5 wasserdicht verbunden. Die etwa vertikale Wand 7 verhindert zusammen mit einer oben auf die Wand 7 aufgesetzten Tropfwasserabdeckung 11 einen Wassereintritt in diesen vorderen Bereich 6 zumindest weitgehend. Zwischen dem hinteren oberen Randbereich 12 der etwa vertikalen Wand 7 und einem hinteren Wandabschnitt 13 der Tropfwasserabdeckung 11, der vor dem Randbereich 12 endet, ist eine Eintrittsöffnung 14 gebildet, durch die ein Bereich des durch die Führungsschiene 2 und das Führungsteil 3 gebildeten U-Rahmenteils verläuft. Durch die gegenüber der vorderen Begrenzungswand 10 der Wasserrinne 5 zurückverlagerte obere Eintrittsöffnung 14 ist keine Abdichtung erforderlich, um auch bei schrägstehendem Fahrzeug einen Wasserdurchtritt des in der Wasserrinne 5 gesammelten Wassers durch die Eintrittsöffnung 14 zu verhindern. Die Tropfwasserabdeckung 11 weist am vorderen und hinteren Rand eine nach oben gerichtete Wasserabweiskante 15, 15' und an ihren Seiten nach unten gerichtete Abdeckwände 16, 16' auf, die sich seitlich außerhalb des von der etwa vertikalen Wand 7 abgetrennten Bereiches 6 befinden. Ein tiefliegender, von der Wasserrinne 5 gesammeltes Wasser aufnehmender Eckbereich 17 ist zwischen der äußeren, nach unten gerichteten Abdeckwand 16 der Tropfwasserabdeckung 11 und einer Seitenwand 18 der Wasserrinne 5 gebildet, in den ein Wasserablaufstutzen 19 mündet. In dem Wasserablaufstutzen 19 ist eine Wasserablauföffnung ausgebildet, die mit einem Ablaufkanal in Verbindung steht. Der seitliche Eckbereich 17, der einen Bodenbereich der Wasserrinne 5 bildet, weist in dem Bereich von der vorderen Begrenzungswand 10 der Wasserrinne 5 und der Stegwand 8 eine zur Unterseite des nach hinten anschließenden Bereiches der Führungsschiene 2 geringere Höhe auf. Die Höhe der etwa vertikalen Wand 7 nimmt etwa von der Begrenzungswand 10 nach hinten ab. Der hintere obere Randbereich 12 der etwa vertikalen Wand 7 ist zur Unterseite des nach hinten anschließenden Bereiches der Führungsschiene 2 tiefer angeordnet. Die einen Schenkel des U-Rahmenteiles bildende Führungsschiene 2 liegt in ihrem vorderen Bereich von oben an dem hinteren oberen Randbereich 12 der etwa vertikalen Wand 7 an und verläuft unmittelbar vor diesem Randbereich 12 nach vorne unten vor die Wasserrinne 5. Die Tropfwasserabdeckung 11 ist im vorderen Bereich an den Verlauf des vorderen oberen Randbereiches der etwa vertikalen Wand 7 angepaßt und verläuft entsprechend nach hinten unten. Der hintere Bereich der Tropfwasserabdeckung 11 ist dagegen an den oberen Rand der einen Schenkel des U-Rahmenteils bildenden Führungsschiene 2 angepaßt und verläuft entsprechend nach hinten oben. Oberhalb der im mittleren Längsbereich der Tropfwasserabdeckung 11 gebildeten Mulde ist ein Seitenbereich eines Windabweisers 20 angeordnet, der in Querrichtung etwa über die ganze Breite der Dachöffnung verläuft. Der Windabweiser 20 ist um eine vordere Querachse 21 schwenkbar in der Wasserrinne 5 befestigt und über eine seitliche Zapfen-/Langlochverbindung 22 mit einem um eine hintere Querachse 23 schwenkbaren Ausstellhebel 24 verbunden, der federbelastet ist und beim Zurückschieben des Deckels den Windabweiser 20 selbsttätig aus seiner Aufbewahrungsstellung in seine Wirkstellung ausstellt. Der Figur ist zu entnehmen, daß die Schenkelwände 9, 9' der etwa vertikalen Wand 7 und der Ausstellhebel 24 seitlich außerhalb der einen Schenkel des U-Rahmenteils bildenden Führungsschiene 2 angeordnet sind. Der mit dem Wasserablaufstutzen 19 in Verbindung stehende, tiefliegende Eckbereich 17 ist von einer Sogplatte 25 überdeckt, die etwa parallel zum Boden dieses Eckbereiches 17 verläuft und in einer dem Durchmesser des Wasserablaufstutzens 19 bzw. der darin ausgebildeten Ablauföffnung entsprechenden Höhe verläuft.

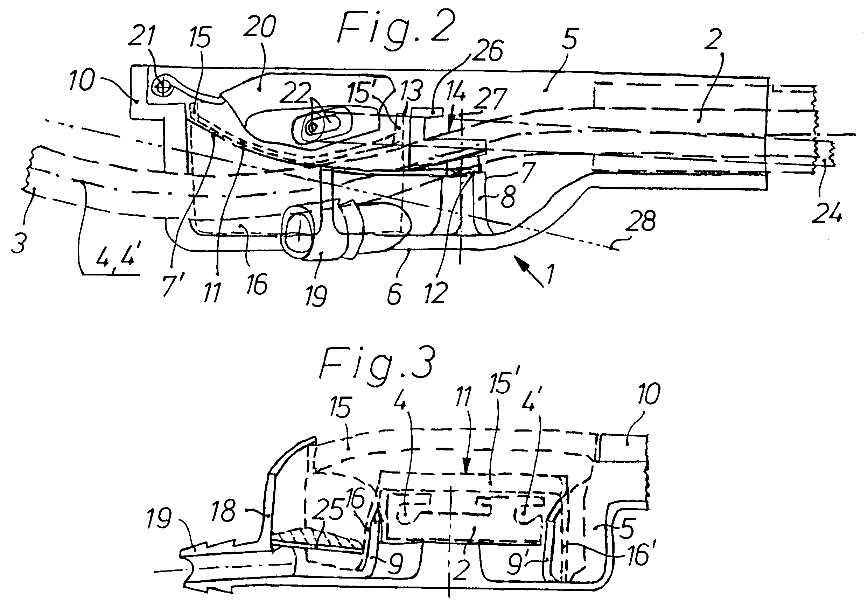

Der Darstellung gemäß Figur 2 sind weitere Einzelheiten entnehmbar. In der Figur ist erkennbar, daß in der dargestellten Aufbewahrungsstellung des Windabweisers 20 dieser innerhalb der Wasserrinne 5 angeordnet ist. In der Figur ist zu erkennen, daß die Tropfwasserabdeckung 11 in ihrem mittleren Längsbereich eine Mulde bildet, die zur Aufnahme eines Seitenbereiches des Windabweisers 20 dient. Zu erkennen ist auch, daß die etwa vertikale Wand 7 eine von der vorderen Begrenzungswand 10 der Wasserrinne 5 nach hinten abnehmende Höhe aufweist. Zur Verdeutlichung ist die in der Figur sichtbare Kontur des oberen Randbereiches der etwa vertikalen Wand 7 mit 7' bezeichnet. In dieser Figur ist eine Stütznase 26 an einem Teil dargestellt, das an der auch in Figur 1 erkennbaren Befestigungsstelle 27 befestigt ist und in Schließstellung des Deckels ein Schlittenteil fixiert. Die Linie 28 soll den maximalen Wasserstand in der Wasserrinne 5 verdeutlichen, der sich ergeben kann, wenn das Fahrzeug um etwa 15 ° gegenüber der Horizontalen nach vorne unten geneigt ist.

In Figur 3 ist ein Querschnitt im Bereich des Wasserablaufstutzens 19, dargestellt, in dem insbesondere die Anordnung der Sogplatte 25 und der Aufnahmeöffnungen 4, 4' in der Führung 2 erkennbar ist. Die seitlichen Abdeckwände 16, 16' an der Tropfwasserabdeckung 11 sind nahezu bis zum Boden der Wasserrinne 5 ausgebildet. Die Führung 2 ist gegenüber dem Boden der Wasserrinne 5 erhöht.

Die Erfindung ist auch in einer von dem Ausführungsbeispiel abweichenden Weise realisierbar. Die Anzahl der Aufnahmeöffnungen in der Führungsschiene zur Aufnahme jeweils eines Antriebselements ist beliebig. Ein Antriebselement kann lediglich auf einer Seite vorgesehen sein. Die etwa vertikale Wand kann einen beliebigen Verlauf aufweisen. Von der besonders vorteilhaften einstückigen Ausbildung der beiden Führungsschienen und des Führungsteils abweichend können die beiden Führungsschienen und das Führungsteil auch durch separate Teile gebildet sein, wobei die Führungsteile beispielsweise wie beim Stand der Technik rohrförmig ausgebildet sein können. Ein Windabweiser kann nicht vorgesehen oder auf andere Weise gebildet sein. Der Antrieb kann ein Elektroantrieb oder ein anderer Antrieb sein, der beispielsweise durch manuelle Betätigung eines Handkurbelantriebs eine Verstellbewegung eines Antriebselements bewirkt. Das Antriebselement kann beispielsweise ein drucksteifes Antriebsseil oder eine biegsame Antriebsstange sein. Um einen Windabweiser in der Wasserrinne aufnehmen zu können, kann der Boden der Wasserrinne im Bereich des Windabweisers bzw. des Eckbereiches gegenüber der Unterseite des nach hinten anschließenden Bereiches der Führungsschiene oder des darin befindlichen Bereiches des Antriebselements tiefer liegen. Vorzugsweise befindet sich der obere Randbereich der etwa vertikalen Wand in einer zur Unterseite des nach hinten anschließenden Bereiches der Führungsschiene oder des darin befindlichen Bereiches des Antriebselements geringeren Höhenlage. Die Sogplatte verhindert bei hohem Wasserstand weitgehend einen Lufteintritt in den Wasserablaufstutzen, so daß eine maximale Wassermenge über den Wasserablaufstutzen ablaufen kann. Die vorteilhafte Sogplatte kann aber auch entfallen. Wände des von der etwa vertikalen Wand abgetrennten Bereiches können ganz oder teilweise entfallen. Die Eintrittsöffnung für das Führungsteil kann in dem hinteren oberen Bereich der etwa vertikalen Wand als Durchtrittsöffnung oder oben offene Ausnehmung ausgebildet sein. Die Tropfwasserabdeckung kann einstückig mit der etwa vertikalen Wand verbunden sein oder als separates Teil über Verbindungsmittel bzw. kraft- oder formschlüssige Halteelemente mit der etwa vertikalen Wand oder einem anderen Wandelement der Wasserrinne bzw. einer Führungsschiene verbunden werden.

## Patentansprüche

1. Rahmen für eine von einem Deckel verschließbare Dachöffnung, insbesondere an einem Kraftfahrzeug, der seitliche Führungsschienen (2) aufweist, die wenigstens ein verstellbares Antriebselement abstützen und vorne über eine querverlaufende Wasserrinne (5) verbunden sind, in die in Eckbereichen (17) ein Wasserablaufstutzen (19) oder dergleichen mündet, wobei wenigstens ein Führungsteil (3) von vorne durch eine obere Eintrittsöffnung (14) der Wasserrinne (5) hindurchgesteckt und stirnseitig an die Führungsschiene (2) angeschlossen ist, das abstützend das Antriebselement zu einem vor der Wasserrinne (5) befestigen Antrieb führt, dadurch gekennzeichnet, daß eine etwa vertikale Wand (7) vor der Führungsschiene (2) einen vorderen Bereich (6) der Wasserrinne (5) von dieser abtrennt und zusammen mit einer oben auf die Wand (7) aufgesetzten Tropfwasserabdeckung (11) einen Wassereintritt in diesen vorderen Bereich (6) weitgehend verhindert und die Eintrittsöffnung (14) für das Führungsteil (3) im hinteren oberen Bereich (Randbereich 12) der etwa vertikalen Wand (7) gebildet ist.

2. Rahmen nach Anspruch 1, dadurch gekennzeichnet, daß die Eintrittsöffnung (14) zwischen einem hinteren oberen Randbereich (12) der etwa vertikalen Wand (7) und einem hinteren Wandabschnitt (13) der Tropfwasserabdeckung (11) gebildet ist, der vor dem Randbereich (12) endet.

3. Rahmen nach Anspruch 1 oder 2, dadurch gekennzeichnet, daß das Führungsteil (3) und die beiden Führungsschienen (2) einstückig verbunden sind und ein U-Rahmenteil bilden.

4. Rahmen nach einem der Ansprüche 1 bis 3, dadurch gekennzeichnet, daß ein seitlicher Bodenbereich der Wasserrinne (5) etwa in dem Bereich von einer vorderen Begrenzungswand (10) der Wasserrinne (5) bis zum hinteren Bereich (Stegwand 8) der etwa vertikalen Wand (7) eine zur Unterseite des nach hinten anschließenden Bereiches der Führungsschiene (2) geringere Höhe aufweist.

5. Rahmen nach einem der Ansprüche 1 bis 4, dadurch gekennzeichnet, daß die etwa vertikale Wand (7) eine nach hinten abnehmende Höhe aufweist.

6. Rahmen nach einem der Ansprüche 1 bis 5, dadurch gekennzeichnet, daß der hintere obere Randbereich (12) der etwa vertikalen Wand (7) eine zur Unterseite des nach hinten anschließenden Bereiches der Führungsschiene (2) oder des darin befindlichen Bereiches des Antriebselements geringere Höhe aufweist.

7. Rahmen nach einem der Ansprüche 1 bis 6, dadurch gekennzeichnet, daß die etwa vertikale Wand (7) in einer etwa horizontalen Ebene U-förmig ausgebildet ist und von den Seiten ihrer querverlaufenden Stegwand (8) etwa nach vorne gerichtete Schenkelwände (9, 9') aufweist, die mit einer vorderen Begrenzungswand (10) der Wasserrinne (5) verbunden sind.

8. Rahmen nach einem der Ansprüche 1 bis 7, dadurch gekennzeichnet, daß das Führungsteil bzw. ein Schenkel (Führungsschiene 2) des U-Rahmenteiles an dem hinteren oberen Randbereich (12) der etwa vertikalen Wand (7) von oben anliegt und unmittelbar vor diesem Randbereich (12) nach vorne unten verläuft.

9. Rahmen nach Anspruch 8, dadurch gekennzeichnet, daß die Tropfwasserabdeckung (11) im vorderen Bereich an den Verlauf des vorderen oberen Randbereiches der etwa vertikalen Wand (7) angepaßt nach hinten unten verläuft und der hintere Bereich der Tropfwasserabdeckung an den oberen Rand des Führungsteils bzw. des Schenkels (Führungsschiene 2) des U-Rahmenteiles angepaßt nach hinten oben verläuft.

10. Rahmen nach einem der Ansprüche 1 bis 9, dadurch gekennzeichnet, daß die Tropfwasserabdeckung (11) am vorderen und hinteren Rand eine nach oben gerichtete Wasserabweiskante (15, 15') und an ihren Seiten nach unten gerichtete Abdeckwände (16, 16') aufweist.

11. Rahmen nach Anspruch 9 oder 10, dadurch gekennzeichnet, daß oberhalb der im mittleren Längsbereich der Tropfwasserabdeckung (11) gebildeten Mulde ein querverlaufender Windabweiser (20) angeordnet ist, der um eine vordere Querachse (21) schwenkbar befestigt und über eine seitliche Zapfen-/Langlochverbindung (22) mit einem um eine hintere Querachse (23) schwenkbaren Ausstellhebel (24) verbunden ist.

12. Rahmen nach einem der Ansprüche 7 bis 11, dadurch gekennzeichnet, daß die Schenkelwände (9, 9') der etwa vertikalen Wand (7) und gegebenenfalls der Ausstellhebel (24) seitlich außerhalb des Führungsteiles bzw. des betreffenden Schenkels (Führungsschiene 2) des U-Rahmenteiles angeordnet sind.

13. Rahmen nach einem der Ansprüche 10 bis 12, dadurch gekennzeichnet, daß sich der mit dem Wasserablaufstutzen (19) oder dergleichen in Verbindung stehende Eckbereich (17) der Wasserrinne (5) zwischen der äußeren, nach unten gerichteten Abdeckwand (16) der Tropfwasserabdeckung (11) und einer Seitenwand (18) der Wasserrinne (5) befindet und dieser Eckbereich (17) von einer mit der Abdeckwand (16) verbundenen Sogplatte (25) überdeckt ist, die zum Boden des Eckbereiches (17) eine etwa dem Durchmesser des einmündenden Wasserablaufstutzens (19) oder dergleichen bzw. der darin ausgebildeten Ablauföffnung entsprechende Höhe aufweist.

## Claims

1. A frame for a roof opening, especially on a motor vehicle, closable by a cover, the frame comprising lateral guide rails (2) which support at least one adjustable drive element and are connected at the front by a transverse gutter (5) into which a water drain pipe (19) or the like opens in corner regions (17), at least one guide part (3) extending from the front through an upper inlet opening (14) of the gutter (5) and being connected at its end face to the guide rail (2), which supports the drive element and conveys it to a drive secured in front of the gutter (5), characterised in that an approximately vertical wall (7) in front of the guide rail (2) separates a front region (6) of the gutter (5) therefrom and, in co-operation with an anti-drip cover (11) mounted on the wall (7), substantially prevents water entering the said front region (6), and the inlet opening (14) for the guide part (3) is formed in the rear upper region (edge region 12) of the approximately vertical wall (7).

2. A frame according to claim 1, characterised in that the inlet opening (14) is formed between a rear upper edge region (12) of the approximately vertical wall (7) and a rear wall portion (13) of the anti-drip cover (11) which ends in front of the edge region (12).

3. A frame according to claim 1 or 2, characterised in that the guide part (3) and the two guide rails (2) are connected in one piece and form a U-frame part.

4. A frame according to any of claims 1 to 3, characterised in that the lateral bottom region of the gutter (5), approximately in the region from a front boundary wall (10) of the gutter (5) to the rear region (web 8) of the approximately vertical wall (7), has a lower height towards the underside of the rear adjoining region of the guide rail (2).

5. A frame according to any of claims 1 to 4, characterised in that the approximately vertical wall (7) has a height which decreases to the rear.

6. A frame according to any of claims 1 to 5, characterised in that the rear upper edge region (12) of the approximately vertical wall (7) has a height which is less towards the underside of the rear adjoining region of the guide rail (2) or of the region of the drive element therein.

7. A frame according to any of claims 1 to 6, characterised in that the approximately vertical wall (7) is formed in a U-shape in an approximately horizontal plane and has side walls (9, 9') extending forwards from the sides of its transverse web wall (8) and connected to a front boundary wall (10) of the gutter (5).

8. A frame according to any of claims 1 to 7, characterised in that the guide part or a side (guide rail 2) of the U-frame part is above and adjoins the rear upper edge region (12) of the approximately vertical wall (7) and extends directly forwards and downwards in front of the said edge region (12).

9. A frame according to claim 8, characterised in that the anti-drip cover (11) in the front region is adapted to the shape of the front upper edge region of the approximately vertical wall (7) and runs downwards to the rear, and the rear region of the anti-drip cover is adapted to the upper edge of the guide part or of the side (guide rail 2) of the U-frame part and runs upwards to the rear.

10. A frame according to any of claims 1 to 9, characterised in that the anti-drip cover (11) has an upwardly extending waterproofing edge (15, 15') at its front and rear edge and downwardly-extending cover walls (16, 16') at its sides.

11. A frame according to claim 9 or 10, characterised in that a transverse wind defector (20) is disposed above the trough formed in the middle longitudinal region of the anti-drip cover (11) and is secured for pivoting around a front transverse axis (21) and is connected via a lateral journal and slot connection (22) to an extension lever (24) pivotable around a rear transverse axis (23).

12. A frame according to any of claims 7 to 11, characterised in that the sides (9, 9') of the approximately vertical wall (7) and, if required, the extension lever (24) are disposed laterally outside the guide part or of the respective side (guide frame 2) of the U-frame part.

13. A frame according to any of claims 10 to 12, characterised in that the corner region (17) of the gutter (5) connected to the water drain pipe (19) or the like is disposed between the outer downwardly extending wall (16) of the anti-drip cover (11) and a side wall (18) of the gutter (5) and this corner region (17) is covered by a suction plate (25) which is connected to the wall (16) and, towards the base of the corner region (17), has a height approximately equal to the diameter of the debouching water drain pipe (19) or the like or of the drain opening formed therein.

## Revendications

1. Cadre pour une ouverture de toit, que l'on peut fermer par un couvercle, en particulier sur un véhicule à moteur, qui présente des rails de guidage latéraux (2), qui prennent appui sur au moins un élément d'entraînement réglable, et sont reliés à l'avant au moyen d'une gouttière (5), qui s'étend transversalement, gouttière dans laquelle débouche dans les zones d'angle (17) un ajutage d'évacuation de l'eau (19) ou un élément analogue, au moins une pièce de guidage (3) étant enfilée par l'avant à travers une ouverture supérieure d'entrée (14) de la gouttière (5) et étant raccordée du côté frontal au rail de guidage (2), pièce de guidage qui guide en prenant appui l'élément d'entraînement vers un mécanisme d'entraînement fixé avant la gouttière (5),
caractérisé en ce qu'
- une paroi à peu près verticale (7) sépare devant le rail de guidage (2) une zone antérieure (6) de la gouttière (5) de celle-ci et empêche dans une large mesure l'eau d'entrer dans cette zone antérieure (6) en même temps qu'un recouvrement des égouttures (11), posé en haut sur la paroi (7), et
- l'orifice d'entrée (14) pour la pièce de guidage (3) est formé dans la zone supérieure arrière (zone de bordure 12) de la paroi à peu près verticale (7).

2. Cadre selon la revendication 1,
caractérisé en ce que
l'orifice d'entrée (14) est formé entre une zone arrière supérieure de bordure (12) de la paroi à peu près verticale (7) et une section postérieure de paroi (13) du recouvrement des égouttures (11), qui se termine devant la zone de bordure (12).

3. Cadre selon la revendication 1 ou 2,
caractérisé en ce que
la pièce de guidage (3) et les deux rails de guidage (2) sont reliés d'une seule pièce et forment une pièce de cadre en forme d'U.

4. Cadre selon la revendication 1 à 3,
caractérisé en ce qu'
une zone latérale du fond de la gouttière (5) présente dans la zone qui va d'une paroi de délimitation antérieure (10) de la gouttière (5) jusqu'à la zone arrière (paroi d'entretoisement 8) de la paroi à peu près verticale (7) une hauteur plus faible par rapport à la face inférieure de la zone du rail de guidage (2) qui se raccorde vers l'arrière.

5. Cadre selon l'une des revendications 1 à 4,
caractérisé en ce que
la paroi à peu près verticale (7) présente une hauteur qui va en décroissant vers l'arrière.

6. Cadre selon l'une des revendications 1 à 5,
caractérisé en ce que
la zone de bordure arrière supérieure (12) de la paroi à peu près verticale (7) présente une hauteur plus faible par rapport à la face inférieure de la zone qui se raccorde vers l'arrière de rail de guidage (2) ou de la zone qui se trouve dedans de l'élément d'entraînement.

7. Cadre selon l'une des revendications 1 à 6,
caractérisé en ce que
la paroi à peu près verticale (7) est constituée sous une forme en U dans un plan à peu près horizontal et présente des parois de branches (9, 9') qui partent des côtés de sa paroi d'entretoisement (8), qui s'étend en travers, et sont orientées à peu près vers l'avant, et qui sont reliées par une paroi antérieure de délimitation (10) de la gouttière (5).

8. Cadre selon l'une des revendications 1 à 7,
caractérisé en ce que
la pièce de guidage ou une branche (rail de guidage 2) de la pièce du cadre en forme d'U repose sur la zone de bordure supérieure arrière (12) de la paroi à peu près verticale (7) à partir du haut et s'étend vers l'avant en bas immédiatement devant cette zone de bordure (12).

9. Cadre selon la revendication 8
caractérisé en ce que
- le recouvrement des égouttures (11) s'étend dans la zone antérieure à l'arrière en bas en étant adapté au parcours de la zone de bordure supérieure antérieure de la paroi à peu près verticale (7), et
- la zone arrière du recouvrement des égouttures s'étend vers l'arrière en haut en étant adaptée au bord supérieur de la pièce de guidage ou de la branche (rail de guidage 2) de la pièce du cadre en forme d'U.

10. Cadre selon l'une des revendications 1 à 9,
caractérisé en ce qu'
au-dessus de la cuvette formée dans la zone longitudinale moyenne du recouvrement des égouttures (11) on dispose un déflecteur de vent (20), qui s'étend en travers, qui est fixé de façon à pouvoir pivoter autour d'un axe antérieur transversal (21), et qui est relié au moyen d'une liaison latérale consistant en un tenon et un trou oblong (22) avec un levier de déploiement (24), qui peut pivoter autour d'un axe transversal postérieur (23).

11. Cadre suivant la revendication 9 ou 10,
caractérisé en ce qu'
au-dessus de la cavité formée dans la zone longitudinale médiane du recouvrement des égouttures (11) est disposé un déflecteur du vent (20) fixé pivotable sur un axe transversal antérieur (21) et est relié au moyen d'une liaison latérale (22) constituée par un tenon et un trou oblong à un levier (24) de soulèvement pivotable sur un axe transversal, postérieur (23).

12. Cadre selon l'une des revendications 7 à 11,
caractérisé en ce que
les parois de branches (9, 9') de la paroi à peu près verticale (7) et le cas échéant le levier de déploiement (24) sont disposés latéralement en dehors de la pièce de guidage ou de la branche concernée (rail de guidage 2) de la pièce du cadre en forme d'U.

13. Cadre selon l'une des revendications 10 à 12,
caractérisé en ce que
- la zone d'angle (17), qui est en liaison avec l'ajutage d'évacuation de l'eau (19) ou un élément analogue de la gouttière (5), se trouve entre la paroi de recouvrement (16), extérieure, orientée vers le bas, du recouvrement des égouttures (11) et une paroi latérale (18) de la gouttière (5) et
- cette zone d'angle (17) est recouverte par une plaque anti-remous (25) reliée à la paroi de recouvrement (16), plaque anti-remous qui présente en direction du fond de la zone angulaire (17) une hauteur qui correspond à peu près au diamètre de l'ajutage d'évacuation de l'eau (19), qui débouche dedans, ou d'un élément analogue ou de l'orifice d'évacuation qui est constitué dedans.
